# EUROPEAN PATENT APPLICATION

(11) **EP 3 659 709 A1**
(43) Date of publication of application: **03.06.2020**
(21) Application number: 18837745.1
(22) Date of filing: 08.05.2018
(51) Int. Cl.: B03C 3/16, B03C 3/47, D03D 15/00, D03D 1/00

(54) **FABRIC SUBSTRATE AND FLUE GAS CO-PURIFICATION DEVICE**

(30) Priority: 25.07.2017 CN 201710612842; 30.08.2017 CN 201710763515
(71) Applicant: China Energy Investment Corporation Limited, Beijing 100011 (CN); China Energy Conservation And Emission Reduction Corporation Limited, Beijing 100011 (CN); Shandong Shenhua Shanda Energy & Environment Co., Ltd., Shandong 250014 (CN)
(72) Inventor: WANG, Shumin, Beijing 100011 (CN); ZHAO, Jian, Beijing 100011 (CN); ZHANG, Bo, Beijing 100011 (CN); SHEN, Rongsheng, Beijing 100011 (CN); YUAN, Lili, Beijing 100011 (CN); WU, Xiping, Beijing 100011 (CN); ZHANG, Donghai, Beijing 100011 (CN)
(74) Representative: Dr. Gassner & Partner mbB
(86) International application number: PCT/CN2018/085963
(87) International publication number: WO 2019/019762

(57) **Abstract**

Disclosed is a fabric substrate and flue gas co-purification device, wherein wet electrostatic dedusting flexible fibre fabrics are made by commingling filaments and staple fibres; warps (1) are filaments and wefts (2) are staple fibres, or the warps (1) are staple fibres and the wefts (2) are filaments, wherein the filaments are monofilaments or multifilaments, and the staple fibres are comprised of several strands of yarns plied together. A plurality of water storage spaces are formed by using broken fibre points of the staple fibres to achieve water retention of a fabric. The present invention greatly improves the performance of the original fibre fabric on the basis of maintaining the fibre fabric as a substrate, and same can solve the problems in the substrate of the stack gas co-purification device that the existing fibre fabric has a poor self-cleaning function and that flushing consumes a lot of water.

## Description

### Technical Field

The invention relates to the technical field of dust precipitation devices, and particularly to a fabric, a plate and a flue gas collaborative purification device.

### Technical Background

A treatment object of a Wet Electro-Static Precipitator (WESP) is usually wet saturated flue gas subjected to wet desulphurization, and the content of acid fog drops and fine particulate matters in the flue gas is reduced to achieve an "ultralow" and even lower emission concentration of particulate matters in the flue gas at an outlet.

Compared with a rigid plate (fiberglass reinforced plastic or stainless steel) WESP, a flexible plate WESP has the prominent advantages of low flushing water consumption, no alkali consumption and the like. This is because a flexible plate is usually made from an acid-resistant organic fiber material and woven from pure short yarns, a surface thereof has an abundant fluff structure and a layer of water film is formed on the surface of the plate under a capillary wicking effect in a wet saturated flue gas environment to endow the plate with a certain self-cleaning function. Meanwhile, the fiber material is kept in a wet state for a long time in the wet saturated flue gas environment due to its water storage and water retention functions, so that a requirement on a certain electrical conductivity required by the plate may be met and kept under the condition that water is not required to be continuously distributed. Such an organic fiber material is adopted for anode cloth mentioned in Patent CN 201610819283.1.

However, a conventional flexible fiber is woven from pure short yarns and has a relatively rough surface, attachment power between particulate matters or dust and a plate is relatively high, and a relatively large amount of water and a relatively high water speed are required to flush the particulate matters or the dust away. Because of an increasingly strict requirement of the state on a particulate matter emission index of coal fired power plants, for adapting to a more complex industrial flue gas purification requirement and simultaneously reducing flushing water consumption, a self-cleaning function and electrical conducting function of a flexible plate are required to be further improved to prevent dust accumulation and a back corona phenomenon further caused thereby to further avoid influence on dust precipitation efficiency.

In addition, in recent years, along with nationwide development of pollutant "ultra-low emission" transformation, WESPs have been widely popularized and applied. A WESP is a novel dust precipitation device for treating trace dust and microparticles, is mainly arranged to remove harmful substances such as dust, acid fog, water drops, aerosol, odor and PM2.5 in wet gas, and is an ideal device for controlling atmospheric dust pollution. A WESP adopts a fundamental dust precipitation principle the same as that of a dry electro-static precipitator (ESP), dust is charged by high voltage corona discharge, the charged dust reaches a dust collection plate/pipe driven by the electric field force, and three stages of charging, collection and dust removal are experienced. For a WESP, a surface of a dust collection electrode is flushed by liquid for dust removal, and fine particulate matters (PM2.5 dust, SO3 acid fog and aerosol), heavy metals (Hg, As, Se, Pb and Cr), organic pollutants (polycyclic aromatic hydrocarbons and dioxin) and the like can be effectively collected. By use of a WESP, soot emission in wet flue gas may be below 10mg/m³ and even 5mg/m³, and dust collection performance is unrelated to dust characteristics. WESPs are applied to treatment of wet flue gas, particularly to treatment of dusty flue gas, subjected to wet desulphurization, of power plants and steel works. However, a WESP is relatively high in device investment cost, and is required to be matched with another dust precipitation device for use, and investment technology economy and running cost thereof are required to be evaluated overall.

A treatment object of a WESP is usually wet saturated flue gas subjected to wet desulphurization, and the content of acid fog drops and fine particulate matters in the flue gas is reduced to achieve an "ultra-low" and even lower index of particulate matters in the flue gas at an outlet. According to different forms of positive dust collection plates, WESPs may be divided into flexible plate WESPs and rigid plate WESPs. A plate is used as a dust collection electrode of a WESP, and whether a water film thereon is efficiently and uniformly distributed or not directly influences particulate matter removal efficiency of the WESP.

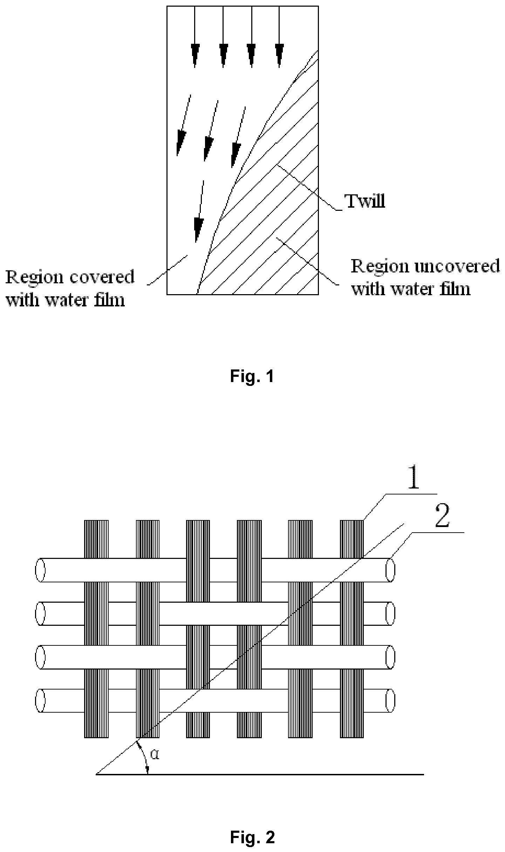

For a flexible plate, a fiber fabric is usually adopted for the plate, the fiber fabric is woven from yarns, twill weaving is mostly adopted, and a surface of the fabric presents textures with a certain twill angle. This may bring the following adverse impact: in an engineering application process, a water flow on the surface of the plate flows according to a certain angle under a diversion effect of the textures, and a water film is deflected towards one side of the plate at a lower half portion of the plate, as shown in Fig. 1, so that it is relatively difficult to form a water film covering the whole surface of the plate, and dust may be accumulated in a region uncovered with the water film to influence dust precipitation efficiency.

For a rigid plate, a surface of the plate is relatively smooth and has no such a texture structure. However, there is no diversion effect, and water may likely form "branch"-shaped channel flows on the surface of the plate, so that it is also relatively difficult to form a water film covering the whole surface of the plate.

Because of the physical surface characteristics of the two plates, a relatively large amount of flushing water is required to form a water film covering the whole surface to complete dust removal in practical engineering, which increases water consumption of a WESP and related power consumption, alkali consumption and the like thereof. For adapting to a requirement of more complex flue gas purification with a great changing particulate matter concentration at an inlet, there is an urgent need for a plate capable of reducing flushing water consumption, implementing uniform distribution of a water film under a small-amount water distribution condition and further ensuring efficient dust precipitation efficiency.

A WESP is an environmental-friendly device for removing harmful substances such as droplets, aerosol and PM2.5 in wet flue gas, and is an ideal device for controlling flue gas dust pollution. Along with ultra-low emission standard reaching and energy conservation transformation of thermal power plants, steel works and the like, WESPs have been increasingly applied. WESPs are divided into rigid plate, flexible plate and fiberglass reinforced plastic WESPs according to dust collection plates. Herein, the flexible WESPs adopt good organic fibers for positive dust collection plates, have a lot of advantages of "almost zero water consumption" and "zero alkali consumption" in a process of treating desulphurized wet flue gas, high overall uniform distribution performance of water films, low running cost, convenience for overhauling and maintenance and the like, and are applied intensively.

At present, a flexible WESP mainly includes a cathode system and an anode system, and the anode system mainly includes upper and lower anode tube sheets, an upright post, a dust collection plate (flexible plate) and the like. The upper and lower anode tube sheets serve to limit and support the upright post, and the upright post is arranged to fix the flexible plate. For example, a dust collection plate fixing device for a flexible WESP and the flexible WESP are provided in Patent CN 201610819283.1. However, an anode upright post of such a flexible WESP has certain inadaptability in a using process, and is long in machining and manufacturing period, manpower and material resources may be greatly consumed during mounting, and transportation cost is considered to increase economic cost.

In addition, the anode upright post occupies a small part of space of the dust collection plate, so that a cross sectional area of a shell of the WESP is enlarged under the condition that an area of the dust collection electrode is kept unchanged. Moreover, the anode upright post is heavy, and a support frame and a support beam are large, so that the amount of a material required by the WESP is increased to cause material waste and increase machining, manufacturing and mounting cost to further cause the phenomena of overall construction diseconomy and the like.

From the above, an anode upright post of a present flexible WESP occupies a small part of space of a dust collection plate, machining, manufacturing, mounting and transportation cost is high, increase of the amount of a material for a support frame and a support beam and the like causes overall construction diseconomy, and an anode system is badly in need of structural improvement.

### Summary of the Invention

Some embodiments of the invention is to provide a fabric, a plate and a flue gas collaborative purification device, so as to solve the problems that a self-cleaning function of an existing fiber fabric of a plate of a flue gas collaborative purification device is poor, flushing water consumption is high, electrical conductivity may be kept only on the basis of a certain water retention rate and the like.

In order to achieve the purpose, according to an embodiment of the invention, a wet electro-static dust precipitation flexible fiber fabric, which is obtained by blend-weaving filaments and short yarns, wherein warps adopt the filaments and wefts adopt the short yarns, or the warps adopt the short yarns and the wefts adopt the filaments; and the filaments are monofilaments or multifilaments, the short yarns are formed by plying a plurality of strands of yarns, and multiple water storage spaces are formed by use of fiber breakpoints of the short yarns to achieve water retention of the fabric.

In an exemplary embodiment, the flexible fiber fabric is a twill woven structure, a weaving density range is (300∼400)^{∗}(100∼200) warps and wefts per 10cm, a weight of each square meter of the fabric is required to be controlled to be 700-1,000g, and a thickness is 0.9-1.2mm.

In an exemplary embodiment, a surface texture angle of the twill woven structure is 45-75 degrees.

In an exemplary embodiment, electrically conductive carbon fiber yarns are blend-woven at intervals in the flexible fiber fabric as an electrically conductive material, a diameter of the carbon fiber yarn is 1-3K, the carbon fiber yarns are compositely twisted with the filaments or the short yarns to improve shear resistance for weaving, and distances between the carbon fiber yarns in warp and weft directions are 1∼5cm.

In an exemplary embodiment, the flexible fiber fabric is a plain woven structure, a weaving density is (300∼400)^{∗}(80∼150) warps and wefts per 10cm, the weight of each square meter is 600∼900g, and the thickness is 0.6-0.9mm.

In an exemplary embodiment, a material for the warps and wefts of the flexible fiber fabric is one or combination of more of polyester, polypropylene and polyamide.

In an exemplary embodiment, a diameter of the filament is 200detx to 2,000detx, and a diameter of the short yarn is 200detx to 2,000detx.

In an exemplary embodiment, a single short yarn is formed by stranding 2∼10 strands of yarns, and a diameter of a single strand of yarns is 10∼40 yarns.

According to another embodiment of the invention, a plate capable of implementing uniform distribution of a water film is provided, which includes the abovementioned flexible fiber fabric.

In an exemplary embodiment, the plate consists of at least two plate regions, twill textures are formed on a surface of any plate region of the at least two plate regions, the twill textures on the surface of any plate region of the at least two plate regions are mutually parallel, and horizontal distances between the twill textures are equal; directions of the twill textures on the surfaces of two adjacent plate regions are opposite, and an angle of the twill texture refers to an acute direction angle, the angle of the twill texture being an included angle between the twill texture and the weft direction.

In an exemplary embodiment, the angles of the twill textures on the surfaces of two adjacent plate regions are equal.

In an exemplary embodiment, in each plate region, if the angles of the twill textures are larger, distances in the weft direction are longer, the horizontal distances between the twill textures are shorter, and the water film is deflected more seriously.

In an exemplary embodiment, the plate is formed by splicing plate regions with corresponding twill textures, or the twill textures on the surface of the plate are formed by weaving.

In an exemplary embodiment, when a length range of a single plate in the warp direction is 3∼9m and a length range in the weft direction is 350∼450mm, a length range of the surface of any plate region of the at least two plate regions in the warp direction is 0.5∼1.2m, an angle range of the twill textures is 45°∼70°, and a range of the horizontal distance between the twill textures is 0.1∼1mm.

According to another embodiment of the invention, a flue gas collaborative purification device is provided, which includes the abovementioned plate.

In an exemplary embodiment, the flue gas collaborative purification device includes four such plates connected end to end, and the flue gas collaborative purification device further includes: cross connecting pieces, two adjacent plates being connected through the corresponding cross connecting piece, and locking devices, the locking devices being arranged to fixedly connect the cross connecting pieces together with the plates.

In an exemplary embodiment, a first locking tooth is arranged on a side edge of the plate, second locking teeth are arranged at four ends of the cross connecting piece, and the locking device is arranged to lock the first locking tooth and the second locking teeth.

In an exemplary embodiment, the flue gas collaborative purification device further includes fixing components, and the fixing components are arranged to fix top ends and bottom ends of the plates.

In an exemplary embodiment, the fixing component includes: an upper tube sheet and first flat plates, an upper end of the plate being wound on the upper tube sheet, the first flat plates being arranged on two sides of the plate in a pressing manner and a first fixing piece fixing the first flat plates and the plate on the upper tube sheet; and a lower tube sheet and a second flat plate, a lower end of the plate reclining on the lower tube sheet, the second flat plate being arranged on the plate in the pressing manner and a second fixing piece fixing the second flat plate and the plate on the lower tube sheet.

In an exemplary embodiment, the flue gas collaborative purification device further includes a housing, the housing encloses a mounting cavity, the plates are mounted in the mounting cavity, and the flue gas collaborative purification device further includes pulling devices for pulling the plates.

In an exemplary embodiment, the pulling device further includes: a short plate, a first end of the short plate being connected with the cross connecting piece; a third flat plate, the third flat plate being fixedly connected with the short plate; a combined steel plate, the combined steel plate including a first steel plate and a second steel plate, a first end of the first steel plate being arranged for fixed connection with an inner wall of the mounting cavity and a first end of the second steel plate being perpendicularly connected with a second end of the first steel plate; and a bent stud, the bent stud including a first stud section and second stud section which are perpendicular to each other, the first stud section being detachably connected with the second steel plate through a first nut and the second stud section being detachably connected with the third flat plate through a second nut.

In an exemplary embodiment, a third locking tooth is arranged at the first end of the short plate, and the third locking tooth is meshed with the second locking tooth, which is not connected with the plate, of the cross connecting piece, and is locked through the locking device.

In an exemplary embodiment, each of the locking device, the first locking tooth, the second locking tooth and the third locking tooth is made from polyester or stainless steel.

In an exemplary embodiment, each of the first flat plate and the second flat plate is made from PP or FRP.

In an exemplary embodiment, each of the bent stud and the combined steel plate is made from a duplex stainless steel 2205 material.

Compared with a related technology, the invention has the following beneficial effects.

For a flexible fiber fabric woven from pure short fibers, the fabric woven by combining the filaments and the short yarns as the warps and the wefts integrates advantages of the filaments and the short yarns, that is, the short yarns have a great number of fiber "breakpoints" (directly appearing as "fluff") forming a large number of "small water storage spaces", so that a water retention function of the fabric (plate) in a wet saturated flue gas environment is improved, which is favorable for the plate to keep relatively high electrical conductivity to a certain extent.

According to the invention, by use of the characteristic of the filament that the surface is smooth, finish quality of the surface of the fabric (plate), compared with that of a pure short yarn, is greatly improved, and particulate matters or dust is unlikely to be attached thereto, so that the self-cleaning function of the fabric is improved. In addition, the carbon fiber yarns are added in a weaving process, so that the electrical conductivity of the fiber fabric is further improved, and an electric field characteristic of the plate in an abnormal state of "no water" and the like is ensured.

According to the invention, factors such as thicknesses of the warps and the wefts, a weaving method, a gram weight of the fabric, the thickness and the texture angles are controlled to ensure requirements on strength, surface tension, uniform distribution of the water film and the like, deflection, caused by the surface textures, of the water film on the surface of the fabric may be eliminated better, the strength may be strengthened, and the tension and flatness of the surface may be kept.

### Brief Description of the Drawings

The drawings forming a part of the application in the specification are adopted to provide a further understanding to the invention. Schematic embodiments of the invention and descriptions thereof are adopted to explain the invention and not intended to form improper limits to the invention. In the drawings:
Fig. 1 schematically illustrates a schematic diagram of forming a water film of a conventional flexible plate;
Fig. 2 is a schematic diagram of a flexible fiber fabric with twill warps and wefts according to the invention;
Fig. 3 is a schematic diagram of a flexible fiber fabric with plain warps and wefts according to the invention;
Fig. 4 schematically illustrates a structure diagram of a short yarn according to the invention;
Fig. 5 schematically illustrates a structure diagram of a flexible plate according to the invention;
Fig. 6 schematically illustrates a structure diagram of a rigid plate according to the invention;
Fig. 7 schematically illustrates a top view of cathode and anode structures according to the invention;
Fig. 8 schematically illustrates a front view of an anode structure according to the invention;
Fig. 9 schematically illustrates a front view of a plate mounted on a fixing device according to the invention;
Fig. 10 schematically illustrates a front view of a pulling device according to the invention; and
Fig. 11 schematically illustrates a top view of a pulling device according to the invention.

Herein, the drawings include the following drawing reference signs:
1: warp; 2: weft; 10: plate; 20: cross connecting piece; 30: locking device; 41: upper tube sheet; 42: first flat plate; 43: lower tube sheet; 44: second flat plate; 45: first fixing piece; 46: second fixing piece; 50: pulling device; 51: short plate; 52: third flat plate; 53: combined steel plate; 531: first steel plate; 532: second steel plate; 54: bent stud; 541: first stud section; 542: second stud section; 55: first nut; 56: second nut; and 60: discharge electrode.

### Detailed Description of the Embodiments

It is to be noted that the embodiments in the application and characteristics in the embodiments may be combined without conflicts. The invention will be described below with reference to the drawings and in combination with the embodiments in detail.

It is to be noted that terms used herein are only adopted to describe specific implementation modes and not intended to limit exemplary implementation modes according to the application. For example, singular forms, used herein, are also intended to include plural forms, unless otherwise clearly pointed out. In addition, it is also to be understood that terms "contain" and/or "include" used in the specification refer/refers to existence of features, steps, operations, apparatuses, components and/or combinations thereof.

It is to be noted that terms like "first" and "second" in the specification, claims and drawings of the application are adopted not to describe a specific sequence or order but to distinguish similar objects. It is to be understood that data used like this may be exchanged under a proper condition for implementation of the implementation modes, described herein, of the application in sequences besides those shown or described here. Moreover, terms like "include" and "have" and any transformation thereof of them are intended to cover nonexclusive inclusions. For example, a process, method, system, product or device including a series of steps or units is not limited to those clearly listed steps or units, but may include other steps or units which are not clearly listed or inherent in the process, the method, the system, the product or the device.

For ease of description, spatial relative terms such as "over", "above", "on an upper surface" and "upper" may be used herein for describing a spatial position relation between a device or feature and other devices or features shown in the drawings. It will be appreciated that the spatial relative terms aim to contain different orientations in usage or operation besides the orientations of the devices described in the drawings. For example, if the devices in the drawings are inverted, devices described as "above other devices or structures" or "over other devices or structures" will be located as "below other devices or structures" or "under other devices or structures". Thus, an exemplar term "above" may include two orientations namely "above" and "below". The device may be located in other different modes (rotated by 90 degrees or located in other orientations), and spatial relative descriptions used herein are correspondingly explained.

As introduced in Background, there exist the shortcomings in the related technology that flexible fibers are all woven from pure short yarns and have relatively rough surfaces, attachment power between particulate matters or dust and a plate is relatively high and a relatively large amount of water and a relatively high water speed are required to flush the particulate matters or the dust away. For solving the problems, the invention discloses a fabric and plate for a flue gas collaborative purification device and the flue gas collaborative purification device.

A wet electro-static dust precipitation flexible fiber fabric is obtained by blend-weaving filaments and short yarns (or called "long and short fibers"). That is, warps adopt the filaments and wefts 2 adopt the short yarns; or the warps 1 adopt the short yarns and the wefts 2 adopt the filaments.

The filaments are monofilaments or multifilaments, and a diameter of the filament for weaving is 200detx to 2,000detx, preferably 800detx∼1,500detx.

A diameter of the short yarn is 200detx to 2,000detx, preferably 800detx∼1,500detx, a single short yarn is formed by plying 2∼10 strands of yarns, preferably plying 4-8 strands of yarns, and a diameter of a single strand of yarns is 10∼40 yarns, preferably 15∼25 yarns.

Plain weaving or twill weaving of the warps 1 and the wefts 2 is adopted for the flexible fiber fabric.

When twill weaving is adopted, since there is no difference between front and back surfaces of the fabric, 2/2∼6/6 weaving methods are suitable, preferably 2/2 and 4/4 weaving methods. Since the fabric used as a plate has certain strength to keep surface tension and flatness in a normal working state, a weaving density is about (300∼400)^{∗}(100∼200) (the numbers of the warps 1 and the wefts 2 per 10cm), a weight of each square meter of the fabric is required to be controlled to be 700∼1,000g, and a thickness is 0.9∼1.2mm. For eliminating deflection, caused by surface textures, of a water film on the surface of the fabric, surface texture angles (included angles between the textures and a horizontal direction) are required to be controlled to be 45∼75 degrees, preferably 45-60 degrees.

When plain weaving (1/1 weaving method) is adopted, the fabric used as the plate has certain strength to keep the surface tension and flatness, the weaving density is (300∼400)^{∗}(80∼150) (the numbers of the warps 1 and the wefts 2 per 10cm), the weight of each square meter is 600∼900g, and the thickness is 0.6-0.9mm.

A material for the warps 1 and wefts 2 of the flexible fiber fabric is one or combination of more of polyester, polypropylene and polyamide. Preferably, the polyester material is adopted for both of the warps 1 and the wefts 2.

Both of a plate capable of implementing uniform distribution of a water film and a flue gas collaborative purification device adopt the flexible fiber fabric as dust precipitation cloth.

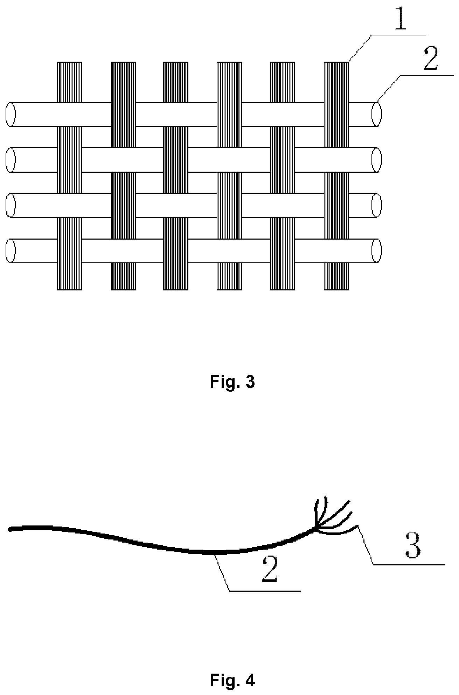

In a typical implementation mode of the application, as shown in Fig. 2, a flexible fiber fabric is provided, which is obtained by weaving warps 1 and wefts 2. The warps 1 adopt polyester filaments, and the wefts 2 adopt polyester short yarns. The filaments are multifilaments, and a diameter is 1,500detx. A diameter of the short yarn is 1,500detx, and as shown in Fig. 3, is formed by plying 5 strands of yarns 3, and a diameter of a single strand of yarns 3 is 25 yarns.

2/2 twill weaving of the warps and the wefts is adopted for the flexible fiber fabric. Since the fabric used as a plate has certain strength to keep surface tension and flatness in a normal working state, a weaving density is regulated to 300^{∗}100 to ensure that a weight of each square meter of the fabric is about 850g and a thickness is about 1.0mm. For eliminating deflection, caused by surface textures, of a water film on a surface of the fabric, a surface texture angle α (included angle between the texture and a horizontal direction) is required to be controlled to be 50 degrees.

The plate of a flue gas collaborative purification device uses the wet electrostatic dust precipitation flexible fiber fabric as anode cloth.

In another typical implementation mode of the application, as shown in Fig. 3, the flexible fiber fabric is obtained by weaving warps 1 and wefts 2. The warps 1 adopt polyester filaments, and the wefts 2 adopt polyester short yarns. The filaments are multifilaments, and a diameter is 1,300detx. A diameter of the short yarn is 1,000detx, and is formed by plying 5 strands of yarns 3, and a diameter of a single strand of yarns 3 is 20 yarns.

Plain (1/1 weaving method) weaving of the warps and the wefts is adopted for the flexible fiber fabric. Since the fabric used as a plate has certain strength to keep surface tension and flatness, a weaving density is regulated to 350^{∗}90 to ensure that a weight of each square meter is about 700g and a thickness is about 0.8mm.

The plate of a flue gas collaborative purification device uses the wet electrostatic dust precipitation flexible fiber fabric in the typical implementation mode as anode cloth.

According to another embodiment of the invention, an embodiment of the invention provides a plate capable of implementing uniform distribution of a water film, so as to solve the problems of poor water film uniform distribution effect and high flushing water consumption of a plate of a WESP in the Background.

The plate capable of implementing uniform distribution of the water film in the embodiment of the invention consists of at least two plate regions, twill textures are formed on a surface of any plate region of the at least two plate regions, the twill textures on the surface of any plate region of the at least two plate regions are mutually parallel, and horizontal distances between the twill textures are equal; directions of the twill textures on the surfaces of two adjacent plate regions are opposite, and an angle of the twill texture refers to an acute direction angle, the angle of the twill texture being an included angle between the twill texture and the weft direction.

In a specific embodiment, the angles of the twill textures on the surfaces of two adjacent plate regions are equal.

In the embodiment, the angles of the twill textures on the surfaces of two adjacent plate regions are set to be equal angles, so that the same flow velocity direction of the water film on the surface of each plate region is able to ensured, which is favorable for uniform distribution of the water film on the surface of each plate region.

In a specific embodiment, in each plate region, if the angles of the twill textures are larger, distances in the weft direction are longer, the horizontal distances between the twill textures are shorter, and the water film is deflected more seriously.

(1) When the plate is a flexible plate, the plate is made from the abovementioned flexible fiber fabric.

For the flexible plate, the plate is obtained by twill weaving of the warps 1 and the wefts 2, and in the warp direction, the twill textures are presented in an alternate leftward and rightward twill or rightward and leftward twill manner.

Moreover, the flexible plate is formed by splicing plate regions with corresponding twill textures, or the twill textures on the surface of the flexible plate are formed by weaving.

It is to be noted that, when the plate is a flexible plate, the twill textures are alternately presented in leftward-rightward directions of the plate region, and is able to implemented by setting weaving parameters or implemented by performing posttreatment of cutting, splicing and the like on the fabric.

As shown in Fig. 1, within a distance d₁₁ far away from an upper top end of the plate in the surface of a first plate region, twills are leftward/rightward, and the included angle between the twill and the weft direction is α₁₁ (acute direction).

Within a length distance d₁₂ in the warp direction in the surface of a second plate region, the twills become rightward/leftward instead, the included angle between the twill and the weft direction is α₁₂ (the acute direction), and the leftward and rightward twills or rightward and leftward twills repeatedly appear in a length direction of the plate.

On the basis of a property of flue gas and a concentration requirement on particulate matters at an outlet of the flue gas collaborative purification device, when a range of a length d₁₄ of a single flexible plate in the warp direction is 3∼9m, preferably 5.5∼7.5m, and a range of a length d15 in the weft direction is 350∼450mm:
a range of the length d₁₁ of the surface of the first plate region in the warp direction is 0.5∼1.2m, and a range of the d₁₂ of the surface of the second plate region in the warp direction is 0.5∼1.2m; and
a range of the angle α₁₁ of the twill texture in the surface of the first plate region is 45°∼70°, and a range of the angle α₁₂ of the twill texture in the surface of the second plate region is also 45°∼70°.

A range of a horizontal distance d13 between the twill textures in the first plate region and the second plate region is 0.1∼1mm. Herein, the range of the horizontal distance d13 between the twill textures is preferably 0.2∼0.5mm.

In a specific embodiment, within a distance d₁₁=600mm away from the upper top end of the plate in the warp direction, the twills are leftward, and the included angle between the twill and the weft direction is α₁₁=65° (the acute direction); and within a next distance d₁₂=600mm, the twills become rightward instead, and the included angle between the twill and the weft direction is α₁₂=65° (the acute direction). The leftward and rightward twills repeatedly appear for three times in the length direction of the plate.

On the basis of the property of the flue gas and the concentration requirement on the particulate matters at the outlet of the flue gas collaborative purification device, the length of the single flexible plate is d₁₄=6.5m, a width of the single plate is d₁₅=440mm, and the horizontal distance d₁₃ between the textures is 0.2mm.

On the basis of the property of the flue gas and the concentration requirement on the particulate matters at the outlet of the flue gas collaborative purification device, the parameters of the flexible plate may maximally retard deflection of the water film and ensure existence of the water film on more than 90% of area of the surface of the flexible plate, thereby ensuring a removal effect of the water film on dust accumulated on the plate.

According to the invention, for the flexible plate, the stripe textures are presented in the alternate leftward/rightward or rightward/leftward manner, so that undiversified texture direction and a deflection phenomenon further caused thereby are avoided.

According to the invention, a surface structure of the plate of the WESP is changed to implement uniform distribution of the water film on the plate under the condition of a relatively small amount of distributed water, so that a dust removal effect may be improved on one hand, and on the other hand, flushing with a large amount of water is avoided to reduce production of wastewater to a relatively great extent.

(2) When the plate is a rigid plate:
the twill textures on the surface of the rigid plate are formed by machining with a machine tool or pultrusion with a mold.

In the embodiment, the rigid plate may be implemented by adopting fiberglass reinforced plastics or stainless steel. When stainless steel is adopted, the twill textures are alternately presented in the leftward-rightward directions in the plate region, and may be formed by machining with a numerical control machine tool such as a milling machine. When fiberglass reinforced plastics is adopted, the twill textures are alternately presented in the leftward-rightward directions of the plate region, and may be formed and implemented by setting parameters of the mold in a pultrusion manner.

In a specific embodiment, when the plate is a rigid plate, protruding heights of the twill textures in all the plate regions are equal.

In the embodiment, the protruding heights of the twill textures in all the plate regions are set to be equal, so that the same flow velocity direction of the water film on the surface of each plate region may be ensured, which is favorable for uniform distribution of the water film on the surface of each plate region.

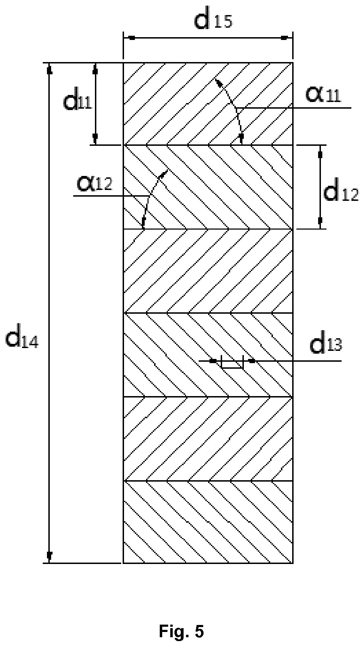

As shown in Fig. 5, protruding stripes at certain inclination angles are arranged on the surface of the rigid plate, and textures of the stripes are presented in the alternate leftward and rightward or rightward and leftward manner.

In a specific embodiment, on the basis of the property of the flue gas and the concentration requirement on the particulate matters at the outlet of the flue gas collaborative purification device, when the plate is a rigid plate and a range of a length d₂₄ of the single rigid plate in the warp direction is 4∼8m, the range of the length d₂₄ of the single rigid plate in the warp direction is preferably 5∼7m.

A range of a length d₂₁ of the surface of the first plate region in the warp direction is 1∼2m, a range of a length d₂₁ of the surface of the second plate region in the warp direction is also 1∼2m, an angle α₂₁ of the twill texture in the surface of the first plate region is 45°∼75°, and an angle α₂₂ of the twill texture in the surface of the second plate region is also 45°∼75°.

A range of a horizontal distance d₂₃ between the twill textures in the first plate region and the second plate region is 0.1∼1mm, and the range is preferably 0.2∼0.5mm.

A range of the protruding height d₂₅ of the twill texture in the first plate region and the second plate region is 0.05∼0.2mm.

In a specific embodiment, within a distance d₂₁=1m away from the upper top end of the plate in a top-down direction, the included angle between the twill and the weft direction is α₂₁=60° (the acute direction); and within a next distance d₂₂=1m, the twills become rightward instead, and the included angle between the twill and the weft direction is α₂₂=60° (the acute direction). The leftward and rightward twills repeatedly appear twice in the length direction of the plate. On the basis of the property of the flue gas and the concentration requirement on the particulate matters at the outlet of the flue gas collaborative purification device, the length of the single plate is d₂₄=6m, the distance between the textures is d₂₃=0.3mm, and the protruding height of the twill is d₂₅=0.05mm.

On the basis of the property of the flue gas and the concentration requirement on the particulate matters at the outlet of the flue gas collaborative purification device, the parameters of the rigid plate may maximally retard deflection of the water film and ensure existence of the water film on more than 90% of area of the surface of the rigid plate, thereby ensuring the removal effect of the water film on the dust accumulated on the plate.

For the rigid plate, the alternate leftward and rightward stripes are added to the surface thereof, so that a diversion effect on the water film of the surface may also be achieved, and occurrence of "branch"-shaped deflection is effectively avoided.

According to the invention, the surface structure of the plate of the WESP is changed to implement uniform distribution of the water film on the plate under the condition of a relatively small amount of distributed water, so that the dust removal effect may be improved on one hand, and on the other hand, flushing with a large amount of water is avoided to reduce production of wastewater to a relatively great extent.

Compared with a related technology, the invention has the following beneficial effects.
(1) According to the invention, for the plate, the stripe textures are presented in the alternate leftward/rightward or rightward/leftward manner, so that undiversified texture direction and the deflection phenomenon further caused thereby are avoided. For the rigid plate, the alternate leftward and rightward stripes are added to the surface thereof, so that the diversion effect on the water film of the surface may also be achieved, and occurrence of "branch"-shaped deflection is effectively avoided.
(2) According to the invention, the surface structure of the plate of the WESP is changed to implement uniform distribution of the water film on the plate under the condition of a relatively small amount of distributed water, so that the dust removal effect may be improved on one hand, and on the other hand, flushing with a large amount of water is avoided to reduce production of wastewater to a relatively great extent.

Referring to Fig. 5 to Fig. 11, an embodiment of the invention also provides a flue gas collaborative purification device.

The flue gas collaborative purification device includes two structural forms.

The first flue gas collaborative purification device includes a plate capable of implementing uniform distribution of a water film in Fig. 5.

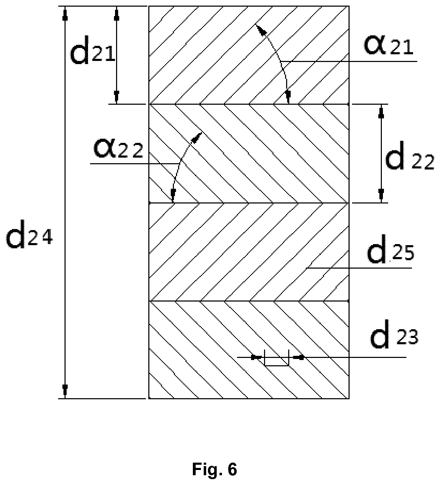

The second flue gas collaborative purification device includes a plate capable of implementing uniform distribution of a water film in Fig. 6.

According to the invention, a surface structure of the plate of a WESP is changed to implement uniform distribution of the water film on the plate under the condition of a relatively small amount of distributed water, so that a dust removal effect is able to improved on one hand, and on the other hand, flushing with a large amount of water is avoided to reduce production of wastewater to a relatively great extent.

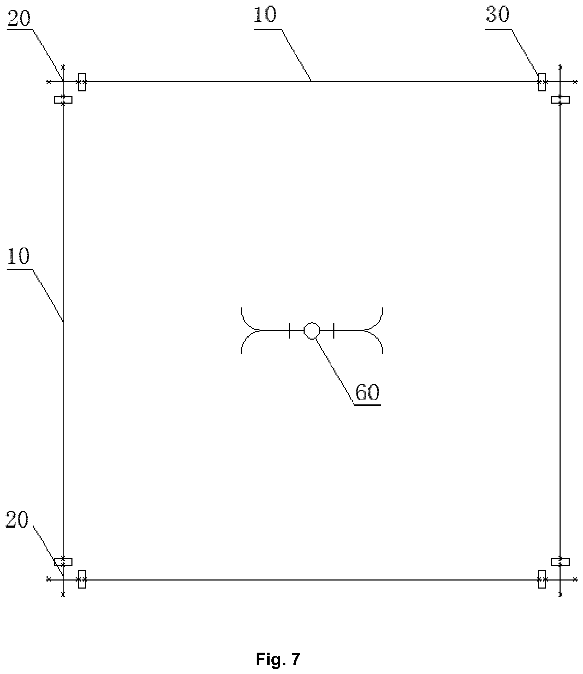

Referring to Fig. 7, the flue gas collaborative purification device in the embodiment includes four plates 10 connected end to end. The flue gas collaborative purification device further includes cross connecting pieces 20 and locking devices 30. Herein, two adjacent plates 10 are connected through the corresponding cross connecting piece 20. The locking devices 30 are arranged to fixedly connect the cross connecting pieces 20 together with the plates 10.

In the invention, the cross connecting piece 20 and the locking device 30 are adopted to connect two adjacent plates 10 together, which, compared with a structure of supporting the plate 10 by an upright post in the related technology, has the advantages that a weight of an anode system is greatly reduced, resources are saved, environmental pollution caused by machining of the upright post is avoided and economy and environmental friendliness are ensured.

In the embodiment, a first locking tooth is arranged on a side edge of the plate 10, second locking teeth are arranged at four ends of the cross connecting piece 20, and the locking device 30 is arranged to lock the first locking teeth and second locking teeth of the cross connecting piece 20 to further connect two adjacent plates 10 together.

The flue gas collaborative purification device in the embodiment further includes fixing components, and the fixing components are arranged to fix top ends and bottom ends of the plates 10.

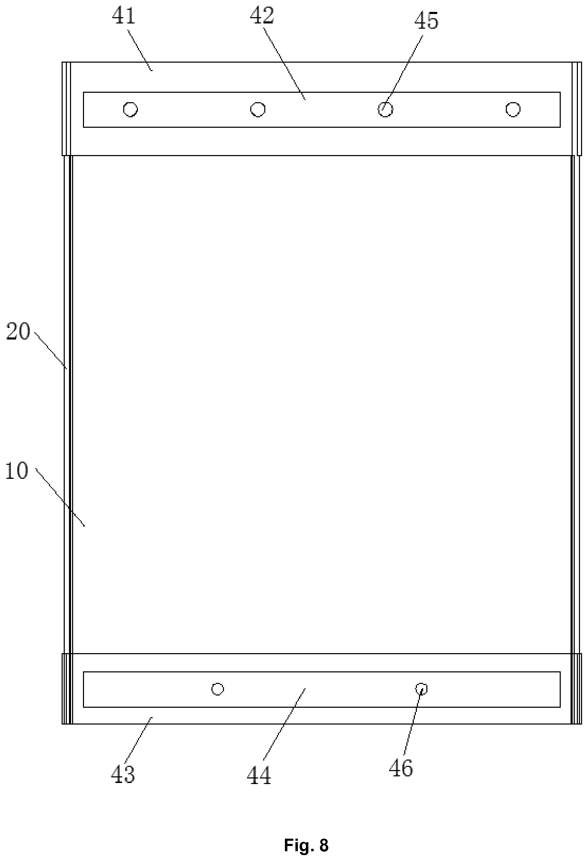

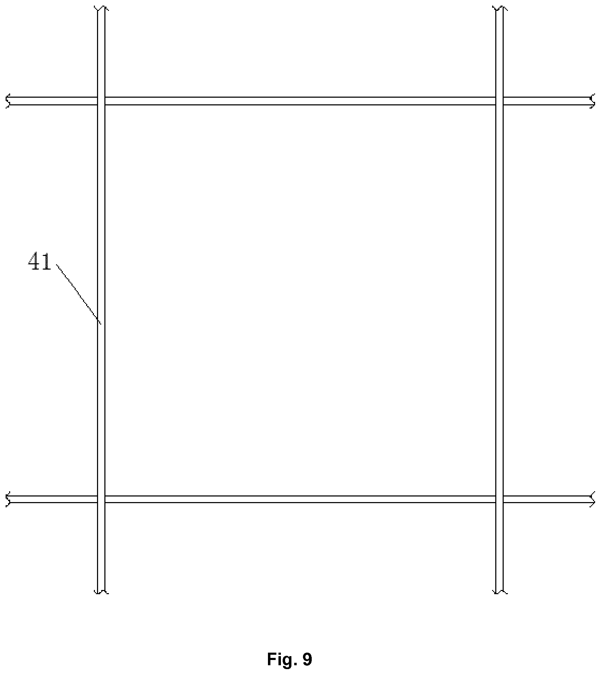

Referring to Fig. 8 and Fig. 9, the fixing component in the embodiment includes an upper tube sheet 41, first flat plates 42, a lower tube sheet 43 and a second flat plate 44.

Herein, an upper end of the plate 10 is wound on the upper tube sheet 41, the first flat plates 42 are arranged on two sides of the plate 10 in a pressing manner, and the first flat plates 42 and the plate 10 are fixed on the upper tube sheet 41 through a first fixing piece 45. A lower end of the plate 10 reclines on the lower tube sheet 43, the second flat plate 44 is arranged on the plate 10 in the pressing manner, and the second flat plate 44 and the plate 10 are fixed on the lower tube sheet 43 through a second fixing piece 46. The structure is simple, and stable fixation of the upper and lower ends of the plate 10 is facilitated.

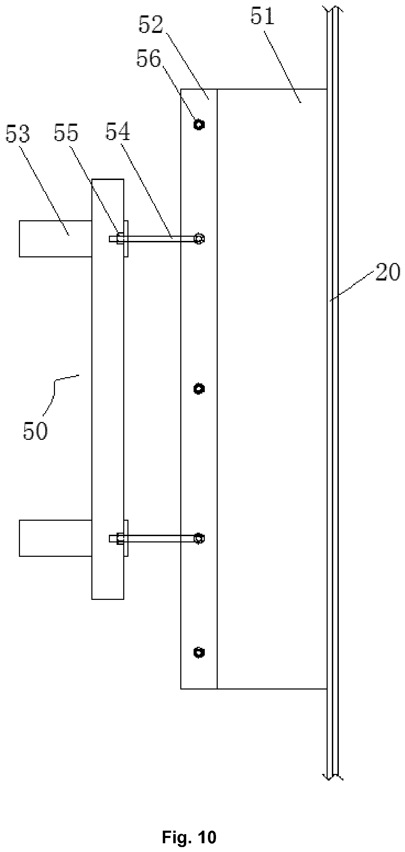

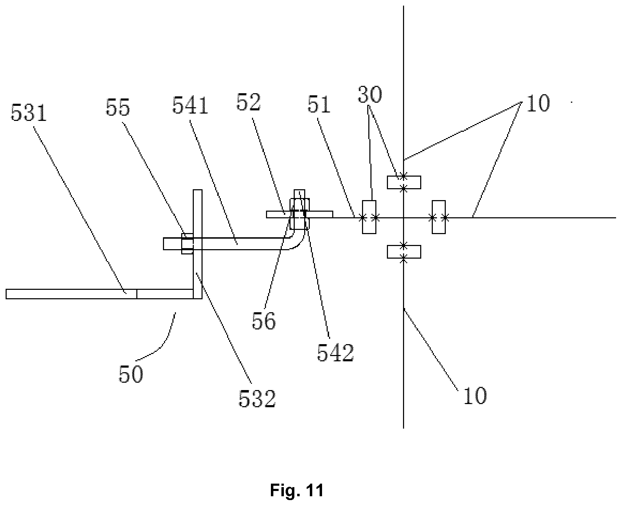

Referring to Fig. 10 and Fig. 11, the flue gas collaborative purification device in the embodiment further includes a housing (not shown in the figures), the housing encloses a mounting cavity, the plates 10 are mounted in the mounting cavity, and the flue gas collaborative purification device further includes pulling devices 50 for pulling the plates 10.

Preferably, the pulling device 50 further includes a short plate 51, a third flat plate 52, a combined steel plate 53 and a bent stud 54.

Herein, a first end of the short plate 51 is connected with the cross connecting piece 20. The third flat plate 52 is fixedly connected with the short plate 51. The combined steel plate 53 includes a first steel plate 531 and a second steel plate 532, a first end of the first steel plate 531 is arranged for fixed connection with an inner wall of the mounting cavity, and a first end of the second steel plate 532 is perpendicularly connected with a second end of the first steel plate 531. The 54 includes a first stud section 541 and second stud section 542 which are perpendicular to each other, the first stud section 541 is detachably connected with the second steel plate 532 through a first nut 55, and the second stud section 542 is detachably connected with the third flat plate 52 through a second nut 56. The plates 10 may be conveniently pulled.

Preferably, a third locking tooth is arranged at the first end of the short plate 51, and the third locking tooth is meshed with the second locking tooth, which is not connected with the plate 10, of the cross connecting piece 20, and is locked through the locking device 30. The structure is simple, and the plates 10 may be conveniently pulled.

From the abovementioned embodiment, it can be seen that the flue gas collaborative purification device in the embodiment includes the cross connecting pieces 20, the cross connecting pieces 20 serve instead of the upright post, the second locking teeth are arranged at the four ends of the cross connecting pieces 20, the first locking teeth are arranged on the side edges of the plates 10, the plates 10 are matched with the cross connecting pieces 20, the plates 10 consist of flexible anode cloth and the first locking teeth arranged at the left and right ends thereof, the cross connecting pieces 20 and the plates 10 are integrally connected through the locking devices 30, the upper tube sheets 41 of an anode are wound at the upper ends of the plates 10, the first flat plates 42 is distributed on the two sides of the upper end of the plate 10, and the first flat plate 42, the plate 10, the upper tube sheet 41, the plate 10 and the first flat plate 42 are fixedly connected in sequence through the first fixing piece 45. The lower end of the plate 10 is flush with a bottom end of the lower tube sheet 43, the second flat plate 44 is arranged on one side of the plate 10, the second flat plate 44, the plate 10 and the lower tube sheet 43 are fixedly connected in sequence through the second fixing piece 46, and frames of the upper tube sheet 41 of the anode and the lower tube sheet 43 are fixed on support beams of upper and lower layers. A cross connecting piece 20 is arranged in each of four corners of each square hole, a plate 10 is arranged between two adjacent cross connecting pieces 20, and an anode system of a wet precipirator designed according to a specific parameter consists of multiple such square holes.

Pulling devices 50 are arranged on the cross connecting pieces 20 around the plates. The pulling device 50 is arranged between the cross connecting piece 20 close to an inner wall of the mounting cavity and the inner wall, and includes a short plate 51 with a certain height. A third locking tooth is arranged at the end, connected with the cross connecting piece 20, of the plate 10. The short plate 51 is connected with the cross connecting piece 20 through the locking device 30. A third flat plate 52 is arranged on the other side of the short plate 51. The third flat plate 52 is wound twice in the short plate 51, and the short plate 51 is connected with the third flat plate through a fastening piece. Two round holes are formed in upper and lower portions of the third flat plate 52. A bent stud 54 penetrates through the round holes. An end of the bent stud 54 is inserted into a regulation hole of a combined steel plate 53 connected with the third flat plate 52. A tension degree of the bent stud 54 is regulated by use of a first nut 55 and a second nut 56. Multiple pulling devices 50 are arranged on the sides, connected with the inner wall, of the cross connecting pieces 20 to further control flatness of the plates 10 to keep certain distances between the plates 10 and a discharge electrode 60, thereby ensuring dust precipitation efficiency.

Each of the locking device 30, the first locking tooth, the second locking tooth and the third locking tooth is made from a corrosion-resistant material such as polyester or stainless steel. Each of the first flat plate 42 and the second flat plate 44 is made from a corrosion-resistant material such as PP or FRP. A duplex stainless steel 2205 material is adopted for the bent stud 54 and the combined steel plate 53, so that the pulling device 50 is a rigid piece, a hole pitch of the square holes of the plate 10 is ensured, and phenomena of frequent voltage flashover, breakdown of the plates 10, influence on the dust precipitation efficiency and the like are avoided.

The cross connecting pieces provided in the invention are used instead of the upright post in the plate fixing device for the flexible WESP and the WESP, so that the weight of the anode system is greatly reduced, resources are saved, environmental pollution caused by machining of the upright post is avoided, and economy and environmental-friendliness are ensured.

After the upright post of the anode is eliminated, specifications of the upper and lower anode frames and support beams for supporting the upright post and the plate are greatly reduced, machining, transportation and mounting cost is reduced, steel is saved, and reasonable utilization of energy resources is ensured.

Elimination of the upright post of the anode may enlarge a usable area of the plate and, on the premise of the same efficiency, may reduce the size of the WESP, avoid waste and reduce the cost.

According to the pulling device provided in the invention, one side of the short plate is connected with the cross connecting piece, the other side of the short plate is wound on the rigid third flat plate, and is connected with the fastening piece, meanwhile, the third flat plate embedded into the short plate is connected through the bent stud, and the end of the bent stud is moved into the regulation hole of the combined steel plate welded with the housing, so that a leftward, rightward, uPNard and downward movement space of the bent stud is ensured, and a maximal regulation allowance is provided.

The pulling device is a rigid piece, and the flatness of the plate (flexible plate) is controlled to ensure a discharge distance between a cathode and an anode and avoid the phenomena of voltage flashover, plate breakdown, reduction in the dust precipitation efficiency and the like.

Thus it can be seen that the upright post of the anode may be eliminated in the invention, the flexible plate of the anode is rapidly mounted, the weights of the support frame and the support beam are obviously reduced, the size of the WESP is reduced, the investment is reduced, and the utilization rate of the plate is increased, so that the dust precipitation efficiency is improved.

The above is only the preferred embodiment of the invention and not intended to limit the invention. For those skilled in the art, the invention may have various modifications and variations. Any modifications, equivalent replacements, improvements and the like made within the spirit and principle of the invention shall fall within the scope of protection of the invention.

## Claims

1. A wet electro-static dust precipitation flexible fiber fabric, obtained by blend-weaving filaments and short yarns, wherein warps (1) adopt the filaments and wefts (2) adopt the short yarns, or the warps (1) adopt the short yarns and the wefts (2) adopt the filaments; and the filaments are monofilaments or multifilaments, the short yarns are formed by plying a plurality of strands of yarns, and multiple water storage spaces are formed by use of fiber breakpoints of the short yarns to achieve water retention of the fabric.

2. The wet electro-static dust precipitation flexible fiber fabric as claimed in claim 1, wherein the wet electro-static dust precipitation flexible fiber fabric is a twill woven structure, a weaving density range is (300∼400)^{∗}(100∼200) warps (1) and wefts (2) per 10cm, a weight of each square meter of the fabric is required to be controlled to be 700-1,000g, and a thickness is 0.9-1.2mm.

3. The wet electro-static dust precipitation flexible fiber fabric as claimed in claim 2, wherein a surface texture angle of the twill woven structure is 45-75 degrees.

4. The wet electro-static dust precipitation flexible fiber fabric as claimed in claim 1, wherein electrically conductive carbon fiber yarns are blend-woven at intervals in the wet electro-static dust precipitation flexible fiber fabric as an electrically conductive material, a diameter of the carbon fiber yarn is 1-3K, the carbon fiber yarns are compositely twisted with the filaments or the short yarns to improve shear resistance for weaving, and distances between the carbon fiber yarns in warp and weft directions are 1∼5cm.

5. The wet electro-static dust precipitation flexible fiber fabric as claimed in claim 1, wherein the wet electro-static dust precipitation flexible fiber fabric is a plain woven structure, a weaving density is (300∼400)^{∗}(80∼150) warps (1) and wefts (2) per 10cm, the weight of each square meter is 600∼900g, and the thickness is 0.6-0.9mm.

6. The wet electro-static dust precipitation flexible fiber fabric as claimed in claim 1, wherein a material for the warps (1) and wefts (2) of the wet electro-static dust precipitation flexible fiber fabric is one or combination of more of polyester, polypropylene and polyamide.

7. The wet electro-static dust precipitation flexible fiber fabric as claimed in claim 1, wherein a diameter of the filament is 200detx to 2,000detx, and a diameter of the short yarn is 200detx to 2,000detx.

8. The wet electro-static dust precipitation flexible fiber fabric as claimed in claim 1, wherein a single short yarn is formed by stranding 2∼10 strands of yarns, and a diameter of a single strand of yarns is 10∼40 yarns.

9. A plate capable of implementing uniform distribution of a water film, comprising the wet electro-static dust precipitation flexible fiber fabric as claimed in any one of claims 1-8.

10. The plate capable of implementing uniform distribution of the water film as claimed in claim 9, consisting of at least two plate regions, wherein twill textures are formed on a surface of any plate region of the at least two plate regions, the twill textures on the surface of any plate region of the at least two plate regions are mutually parallel, and horizontal distances between the twill textures are equal; directions of the twill textures on the surfaces of two adjacent plate regions are opposite, and an angle of the twill texture refers to an acute direction angle, the angle of the twill texture being an comprised angle between the twill texture and the weft direction.

11. The plate capable of implementing uniform distribution of the water film as claimed in claim 10, wherein the angles of the twill textures on the surfaces of two adjacent plate regions are equal.

12. The plate capable of implementing uniform distribution of the water film as claimed in claim 10, wherein, in each plate region, if the angles of the twill textures are larger, distances in the weft direction are longer, the horizontal distances between the twill textures are shorter, and the water film is deflected more seriously.

13. The plate capable of implementing uniform distribution of the water film as claimed in claim 10, wherein the plate capable of implementing uniform distribution of the water film is formed by splicing plate regions with corresponding twill textures, or the twill textures on the surface of the plate capable of implementing uniform distribution of the water film are formed by weaving.

14. The plate capable of implementing uniform distribution of the water film as claimed in claim 10, wherein, when a length range of a single plate capable of implementing uniform distribution of the water film in the warp direction is 3∼9m and a length range in the weft direction is 350∼450mm, a length range of the surface of any plate region of the at least two plate regions in the warp direction is 0.5∼1.2m, an angle range of the twill textures is 45°∼70°, and a range of the horizontal distance between the twill textures is 0.1∼1mm.

15. A flue gas collaborative purification device, comprising the plate (10) as claimed in any one of claims 9-14.

16. The flue gas collaborative purification device as claimed in claim 15, comprising four such plates (10) connected end to end and further comprising:
cross connecting pieces (20), two adjacent plates (10) being connected through the corresponding cross connecting piece (20); and
locking devices (30), the locking devices (30) being arranged to fixedly connect the cross connecting pieces (20) together with the plates (10).

17. The flue gas collaborative purification device as claimed in claim 16, wherein a first locking tooth is arranged on a side edge of the plate (10), second locking teeth are arranged at four ends of the cross connecting piece (20), and the locking device (30) is arranged to lock the first locking tooth and the second locking teeth.

18. The flue gas collaborative purification device as claimed in claim 15, further comprising fixing components, wherein the fixing components are arranged to fix top ends and bottom ends of the plates (10).

19. The flue gas collaborative purification device as claimed in claim 18, wherein the fixing component comprises:
an upper tube sheet (41) and first flat plates (42), an upper end of the plate (10) being wound on the upper tube sheet (41), the first flat plates (42) being arranged on two sides of the plate (10) in a pressing manner and a first fixing piece (45) fixing the first flat plates (42) and the plate (10) on the upper tube sheet (41); and
a lower tube sheet (43) and a second flat plate (44), a lower end of the plate (10) reclining on the lower tube sheet (43), the second flat plate (44) being arranged on the plate (10) in the pressing manner and a second fixing piece (46) fixing the second flat plate (44) and the plate (10) on the lower tube sheet (43).

20. The flue gas collaborative purification device as claimed in claim 17, further comprising a housing, wherein the housing encloses a mounting cavity, the plates (10) are mounted in the mounting cavity, and the flue gas collaborative purification device further comprises pulling devices (50) for pulling the plates (10).

21. The flue gas collaborative purification device as claimed in claim 20, wherein the pulling device (50) further comprises:
a short plate (51), a first end of the short plate (51) being connected with the cross connecting piece (20);
a third flat plate (52), the third flat plate (52) being fixedly connected with the short plate (51);
a combined steel plate (53), the combined steel plate (53) comprising a first steel plate (531) and a second steel plate (532), a first end of the first steel plate (531) being arranged for fixed connection with an inner wall of the mounting cavity and a first end of the second steel plate (532) being perpendicularly connected with a second end of the first steel plate (531); and
a bent stud (54), the bent stud (54) comprising a first stud section (541) and second stud section (542) which are perpendicular to each other, the first stud section (541) being detachably connected with the second steel plate (532) through a first nut (55) and the second stud section (542) being detachably connected with the third flat plate (52) through a second nut (56).

22. The flue gas collaborative purification device as claimed in claim 21, wherein a third locking tooth is arranged at the first end of the short plate (51), and the third locking tooth is meshed with the second locking tooth, which is not connected with the plate (10), of the cross connecting piece (20), and is locked through the locking device (30).

23. The flue gas collaborative purification device as claimed in claim 22, wherein each of the locking device (30), the first locking tooth, the second locking tooth and the third locking tooth is made from polyester or stainless steel.

24. The flue gas collaborative purification device as claimed in claim 19, wherein each of the first flat plate (42) and the second flat plate (44) is made from PP or FRP.

25. The flue gas collaborative purification device as claimed in claim 21, wherein each of the bent stud (54) and the combined steel plate (53) is made from a duplex stainless steel 2205 material.
